# EUROPÄISCHE PATENTANMELDUNG

(11) **EP 2 259 406 A1**
(43) Veröffentlichungstag der Anmeldung: **08.12.2010**
(21) Anmeldenummer: 09162064.1
(22) Anmeldetag: 05.06.2009
(51) Int. Cl.: H02J 9/00, G06F 1/32

(54) **Einrichtung zur Energieversorgung im Stand-by-Betrieb**

(71) Anmelder: Siemens Aktiengesellschaft, 80333 München (DE)
(72) Erfinder: Berz, Arno, 76287 Rheinstetten (DE)

(57) **Zusammenfassung**

Erfindungsgemäß wird eine Einrichtung zur Stromversorgung eines Geräts oder einer Anlage im Stand-by-Betrieb vorgeschlagen, wobei das Gerät oder die Anlage über einen Schalter (2) an ein Stromversorgungsnetz (3) anschließbar ist. Sie ist gekennzeichnet durch einen Energiespeicher (6) zur Stromversorgung des Geräts oder der Anlage im Stand-by-Betrieb, durch eine Ladeeinrichtung (5) zur Aufladung des Energiespeichers (6) über das Stromversorgungsnetz (3) und durch eine Überwachungseinrichtung (7) zur Überwachung des Ladezustands des Energiespeichers (6).

## Beschreibung

Die Erfindung betrifft eine Einrichtung zur Stromversorgung eines Geräts oder einer Anlage im Stand-by-Betrieb, wobei das Gerät oder die Anlage über einen Schalter an ein Stromversorgungsnetz anschließbar ist.

Derartige Einrichtungen sind bei modernen Personalcomputern und Industrie-Personalcomputern bekannt, die über eine Betriebsbereitschaft verfügen, um die Geräte ferngesteuert einschalten zu können. Der Strombedarf für diese Betriebsbereitschaft ist zwar gering, aber ein hierbei üblicherweise verwendeter Spannungswandler arbeitet während der Betriebsbereitschaft mit sehr schlechtem Wirkungsgrad.

Der Erfindung liegt daher die Aufgabe zugrunde, eine Einrichtung der oben genannten Art vorzuschlagen, die eine verlustarme Energieversorgung im Stand-by-Betrieb ermöglicht.

Die Aufgabe wird mit den Merkmalen nach Anspruch 1 gelöst.

Weiterbildungen der Erfindung sind den Unteransprüchen zu entnehmen.

Eine besonders vorteilhafte Ausführungsform gemäß Anspruch 2 besteht, wenn der Schalter durch die Überwachungseinrichtung ansteuerbar ist.

Weiterhin ist es vorteilhaft, wenn gemäß Anspruch 3 der Schalter im Stand-by-Betrieb abhängig vom Ladezustand des Energiespeichers offen ist.

Von Vorteil ist außerdem, wenn nach Anspruch 4 der Schalter im Stand-by-Betrieb zur Nachladung des Energiespeichers über das Stromversorgungsnetz geschlossen ist.

Gemäß Anspruch 5 ist der Schalter vorteilhafterweise als elektronischer Schalter ausgeführt.

Eine besonders Vorteilhafte Ausführungsform besteht außerdem, wenn gemäß Anspruch 6 das Stromversorgungsnetz als Wechselstromnetz ausgeführt ist und zur Stromwandlung in Gleichstrom ein entsprechender Wandler vorgesehen ist.

Ein Ausführungsbeispiel der Erfindung wird im Folgenden anhand einer Zeichnung näher erläutert.

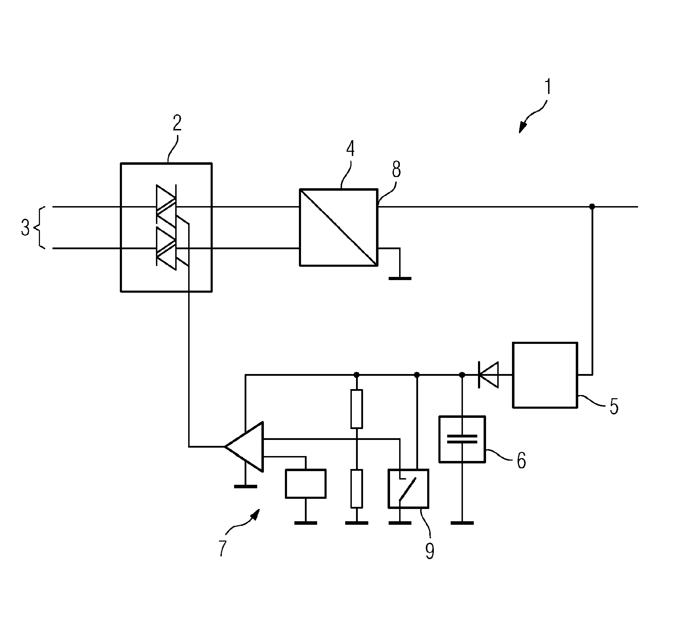

Die Zeichnung zeigt eine Einrichtung 1 zur Stromversorgung eines Geräts oder einer Anlage im Stand-by-Betrieb. Das Gerät oder die Anlage ist über einen Schalter 2 an ein Stromversorgungsnetz 3, hier ein Wechselstromnetz, anschließbar. Der Wechselstrom wird in einem Wandler 4 in einen Gleichstrom umgewandelt, um hiermit das Gerät oder die Anlage mit elektrischer Energie zu versorgen kommt. Die Einrichtung 1 weist eine Ladeeinrichtung 5, einen Energiespeicher 6 und eine Überwachungseinrichtung 7 auf. Sie ist an die sekundäre Seite 8 des Wandlers 3 angeschlossen wie das hier nicht dargstellte Gerät oder die Anlage.

Bei Stromversorgung des Geräts oder der Anlage, d.h. bei geschlossenem Schalter 2, wird der Energiespeicher 6 über die Ladeeinrichtung 5 aufgeladen. Bei geöffnetem Schalter 2 befindet sich das Gerät oder die Anlage im Stand-by-Betrieb, in der der Energiespeicher 6 den Strom für die Bereitschaftslogik 9 bereitstellt, um z.B. das Gerät oder die Anlage über eine Fernbedienung wieder einzuschalten. Die Überwachungseinrichtung 7 ist hier mit einem Komparator ausgeführt, der bei Absenken des Ladezustands auf einen Referenzpegel den hier elektronisch ausgeführten Schalter 2 schließt. Damit kann eine Nachladung des Energiespeichers 6 im Stand-by-Betrieb erfolgen, um für die Bereitschaftslogik 9 ausreichend Energie zur Verfügung zu stellen. Die Bereitschaftslogik 9 ermöglicht z.B. eine ferngesteuerte Einschaltung des Geräts oder der Anlage.

Der besondere Vorteil der erfindungsgemäßen Einrichtung 1 besteht darin, dass die Stromversorgung der Bereitschaftslogik 9 im Stand-by-Betrieb aus dem Energiespeicher 6 erfolgt, solange in diesem noch ausreichend Energie gespeichert ist.

## Patentansprüche

1. Einrichtung zur Stromversorgung eines Geräts oder einer Anlage im Stand-by-Betrieb, wobei das Gerät oder die Anlage über einen Schalter (2) an ein Stromversorgungsnetz (3) anschließbar ist, **gekennzeichnet durch** einen Energiespeicher (6) zur Stromversorgung des Geräts oder der Anlage im Stand-by-Betrieb, **durch** eine Ladeeinrichtung(5) zur Aufladung des Energiespeichers (6) über das Stromversorgungsnetz (3) und **durch** eine Überwachungseinrichtung (7) zur Überwachung des Ladezustands des Energiespeichers (6).

2. Einrichtung nach Anspruch 1, **dadurch gekennzeichnet, dass** der Schalter (2) durch die Überwachungseinrichtung (7) ansteuerbar ist.

3. Einrichtung nach Anspruch 1 oder 2, **dadurch gekennzeichnet, dass** der Schalter (2)im Stand-by-Betrieb abhängig vom Ladezustand des Energiespeichers (6) offen ist.

4. Einrichtung nach Anspruch 3, **dadurch gekennzeichnet, dass** der Schalter (2) im Stand-by-Betrieb zur Nachladung des Energiespeichers (6 )über das Stromversorgungsnetz (3) geschlossen ist.

5. Einrichtung nach einem der vorangehenden Ansprüche, **dadurch gekennzeichnet, dass** der Schalter (2) als elektronischer Schalter ausgeführt ist.

6. Einrichtung nach einem der vorangehenden Ansprüche, **dadurch gekennzeichnet, dass** das Stromversorgungsnetz (3) als Wechselstromnetz ausgeführt ist und zur Stromwandlung in Gleichstrom ein entsprechender Wandler (4) vorgesehen ist.
